# EUROPEAN PATENT APPLICATION

(11) **EP 4 289 907 A1**
(43) Date of publication of application: **13.12.2023**
(21) Application number: 22305854.6
(22) Date of filing: 10.06.2022
(51) Int. Cl.: C09D 5/14, C09D 7/48, C09D 7/63, C09D 7/80

(54) **HALS AS ANTI-MICROBIAL ADDITIVES IN FREE-RADICAL SYSTEMS**

(71) Applicant: ARKEMA FRANCE, 92700 Colombes (FR)
(72) Inventor: LI, Ling, Exton, 19341 (US); RUIZ, Elaine, Exton, 19341 (US); SCHAEFFER, William, Exton, 19341 (US); MEEHAN, Gabrielle, Exton, 19341 (US)
(74) Representative: Leca, François Michel

(57) **Abstract**

The present invention relates to a method for protecting a surface of a substrate by providing a curable composition comprising a (meth)acrylate-functionalized compound and a HALS, applying the composition on a surface of a substrate, curing the composition and converting the HALS to a halamine by treatment with a halogenating agent. The invention also relates to a curable composition comprising a HALS, to a cured composition comprising a halamine and to the use of a HALS to obtain an antimicrobial coating on a surface of a substrate.

## Description

### FIELD OF THE INVENTION

The present invention relates to a method for protecting a surface of a substrate by providing a curable composition comprising a (meth)acrylate-functionalized compound and a HALS, applying the composition on a surface of a substrate, curing the composition and converting the HALS to a halamine by treatment with a halogenating agent. The invention also relates to a curable composition comprising a HALS, to a cured composition comprising a halamine and to the use of a HALS to obtain an antimicrobial coating on a surface of a substrate.

### BACKGROUND OF THE INVENTION

Hindered amine light stabilizers (HALS) are low cost, low toxicity photostabilizing and thermal stabilizing agents used in a broad range of commercial materials (such as in thermoplastic polymers, emulsions and paints) and which can be further chemically modified to achieve different functions. In the presence of halogenating agents, it is possible to transform HALS into N-halo-hindered amines (halamines) *(*Macromolecules 2005, 38, 8116-8119, Chem. Rev. 2017, 117, 4806-4862) which exhibit antimicrobial properties against both gram-negative and gram-positive bacteria. For example, N-chlorination of the hindered amine light stabiliser bis(2,2,6,6-tetramethyl-4-piperidinyl) sebacate (TINUVIN^{®}770) by reaction with sodium dichloroisocyanurate has been described and the resulting N-chlorinated compound was incorporated into a polyester-based paint (Progress in Organic Coatings 99 (2016) 330-336). US 7,998,886 describes a textile product comprising a plurality of yarns where the yarns comprise a HALS or halamine compound disposed on their exterior surface and/or dispersed in the interior portion of the yarns. US 7,399,793 describes a UV curable resin mixture containing a HALS that is sprayed onto a panel and cured to provide a protective clearcoat composition, but fails to disclose the antimicrobial activity of coatings made in accordance therewith.

There is a need for a facile and cost effective method of providing antimicrobial surfaces where the antimicrobial properties of the surface can be recharged as needed, especially if the surfaces are also resistant to weathering (e.g., surfaces that are photo- and thermally- resistant). The present invention accomplishes these objectives by providing a curable composition comprising a (meth)acrylate-functionalized compound and a HALS, applying the composition to a substrate surface, curing the composition and converting the HALS to a halamine.

### SUMMARY OF THE INVENTION

An aspect of the invention is a method for protecting a surface of a substrate, the method comprising:
- applying a curable composition comprising a (meth)acrylate-functionalized compound and a hindered amine light stabilizer (HALS) on a surface of a substrate ;
- curing the curable composition to provide a cured composition;
- treating the cured composition with a halogenating agent to halogenate the HALS present in the cured composition; and
- optionally removing any residual halogenating agent.

Another aspect of the invention is a method of treating a cured composition with a halogenating agent to halogenate a HALS present in the cured composition wherein the cured composition comprises a cured product of a curable composition comprising a HALS and a (meth)acrylate-functionalized compound.

Another aspect of the invention is a curable composition comprising a (meth)acrylate-functionalized compound and HALS, wherein the total amount of HALS in the composition is at least 3% by weight based on the weight of the composition.

Another aspect of the invention is a cured composition comprising a N-halo-hindered amine, wherein the cured composition is obtained by (a) curing a curable composition according to the invention; and (b) then converting the HALS to a N-halo-hindered amine by treating the HALS with a halogenating agent..

Another aspect of the invention is the use of at least one HALS, at least one (meth)acrylate-functionalized compound and at least one halogenating agent to obtain an antimicrobial coating on a surface of a substrate.

### BRIEF DESCRIPTION OF THE DRAWINGS

The figures provided herein are illustrative of embodiments of the invention but are not intended to otherwise limit the scope of the invention as described herein.

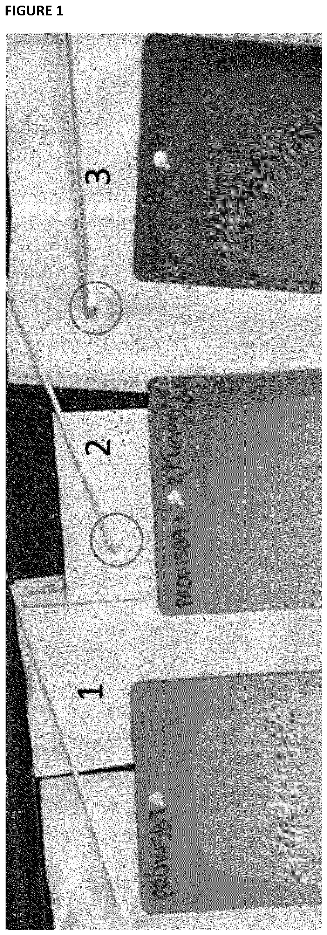

**Figure 1** illustrates the results observed when a cotton swab saturated with a Znl/starch solution was swiped across the surface of each of cured samples 1, 2 and 3 after treatment of the cured samples with bleach as a test for the presence of a halamine, where the color purple was indicative of the presence of a halamine. No purple color was observed on the cotton swab for sample 1 (PRO14589) as a control. A slight purple color was observed on the cotton swab for sample 2 (PRO14589 and 2% Tinuvin 770^{®}). A darker purple color was observed on the cotton swab for sample 3 (PRO14589 and 5% Tinuvin 770^{®}).

### DETAILED DESCRIPTION OF THE INVENTION

### Curable Composition

The invention relates to a curable composition. The curable composition may be applied on a surface of a substrate, then cured and subsequently treated with a halogenating agent.

The curable composition comprises a (meth)acrylate-functionalized compound and a hindered amine light stabilizer (HALS) as detailed below. The curable composition may further comprise one or more additives as detailed below.

### (Meth)acrylate-functionalized compound

The curable composition comprises a (meth)acrylate-functionalized compound. The curable composition may comprise a mixture of (meth)acrylate-functionalized compounds.

A (meth)acrylate-functionalized compound may be described as a compound bearing one or more (meth)acrylate functional groups per molecule. As used herein, the term "(meth)acrylate" refers to both methacrylate (-O-C(=O)-C(CH₃)=CH₂) as well as acrylate (-O-C(=O)-CH=CH₂) functional groups. (Meth)acrylate-functionalized compounds suitable for use in the present invention may be generally described as ethylenically unsaturated compounds containing at least one carbon-carbon double bond alpha to an ester group (a compound containing at least one α,β-unsaturated ester moiety), in particular a carbon-carbon double bond capable of participating in a free radical reaction or anionic reaction, in particular a reaction initiated by exposure to UV energy, visible light or an electron beam. Such reactions may result in a polymerization or curing whereby the (meth)acrylate-functionalized compound becomes part of a polymerized matrix or polymeric chain. In various embodiments of the invention, the (meth)acrylate-functionalized compound may contain one, two, three, four, five or more (meth)acrylate functional groups per molecule. Combinations of multiple (meth)acrylate-functionalized compounds containing different numbers of (meth)acrylate groups may be utilized in the curable compositions of the present invention.

The curable composition of the invention thus contain one or more (meth)acrylate-functionalized compounds capable of undergoing free radical and/or anionic polymerization (curing), for example by exposure to UV energy, visible light or an electron beam, thus providing a cured composition.

The (meth)acrylate-functionalized compounds may be oligomers or monomers or a combination of oligomer(s) and monomer(s).

The curable composition may comprise a (meth)acrylate-functionalized monomer. The curable composition may comprise a mixture of (meth)acrylate-functionalized monomers.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 3 (meth)acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

The curable composition may comprise a mono(meth)acrylate-functionalized monomer. The mono(meth)acrylate-functionalized monomer may advantageously function as a reactive diluent and reduce the viscosity of the composition.

Examples of suitable mono(meth)acrylate-functionalized monomers include, but are not limited to, mono-(meth)acrylate esters of aliphatic alcohols (wherein the aliphatic alcohol may be straight chain or branched and may be a mono-alcohol, a di-alcohol or a polyalcohol, provided only one hydroxyl group is esterified with (meth)acrylic acid); mono-(meth)acrylate esters of cycloaliphatic or heterocyclic alcohols; mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric or polymeric glycols such as diethylene glycol, triethylene glycol, dipropylene glycol, tripropylene glycol, polyethylene glycol, and polypropylene glycol; mono-(meth)acrylate esters of monoalkyl ethers of glycols or oligoglycols caprolactone mono(meth)acrylates; as well as the alkoxylated (i.e. ethoxylated and/or propoxylated) derivatives thereof; and combinations thereof.

The following compounds are specific examples of mono(meth)acrylate-functionalized monomers suitable for use in the curable composition: methyl (meth)acrylate; ethyl (meth)acrylate; n-propyl (meth)acrylate; isopropyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; isodecyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 4-hydroxybutyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; 2-(2-ethoxyethoxy)ethyl (meth)acrylate; cyclohexyl (meth)acrylate; glycidyl (meth)acrylate; 2-phenoxyethyl (meth)acrylate; benzyl (meth)acrylate; phenol (meth)acrylate; nonylphenol (meth)acrylate; cyclic trimethylolpropane formal (meth)acrylate; isobornyl (meth)acrylate; tricyclodecanemethanol (meth)acrylate; tert-butylcyclohexyl (meth)acrylate; trimethylcyclohexyl (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; polyethylene glycol monomethyl ether (meth)acrylate; hydroxyl ethyl-butyl urethane (meth)acrylate; 3-(2-hydroxyalkyl)oxazolidinone (meth)acrylate; (2,2-dimethyl-1,3-dioxolan-4-yl)methyl (meth)acrylate; (2-ethyl-2-methyl-1,3-dioxolan-4-yl)methyl (meth)acrylate; 1,3-dioxan-5-yl (meth)acrylate; (1,3-dioxolan-4-yl)methyl (meth)acrylate; glycerol carbonate (meth)acrylate as well as the alkoxylated (i.e. ethoxylated and/or propoxylated) derivatives thereof; and combinations thereof.

The curable composition may comprise a (meth)acrylate-functionalized monomer containing two or more (meth)acrylate functional groups per molecule.

Examples of suitable (meth)acrylate-functionalized monomers containing two or more (meth)acrylate groups per molecule include acrylate and methacrylate esters of polyhydric alcohols (organic compounds containing two or more, e.g., 2 to 6, hydroxyl groups per molecule). Specific examples of suitable polyhydric alcohols include ethylene glycol, 1,2- or 1,3-propylene glycol, 1,2-, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, F or S, trimethylolmethane, trimethylolethane, trimethylolpropane, di(trimethylolpropane), triethylolpropane, pentaerythritol, di(pentaerythritol), glycerol, di-, tri- or tetraglycerol, polyglycerol, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), an alditol (i.e. erythritol, threitol, arabitol, xylitol, ribitol, mannitol, sorbitol, glactitol, fucitol or iditol), a dianhydrohexitol (i.e. isosorbide, isomannide or isoidide), tris(2-hydroxyethyl)isocyanurate, a polybutadiene polyol, as well as the alkoxylated (i.e. ethoxylated and/or propoxylated) derivatives thereof, the derivatives obtained by ring-opening polymerization of a lactone (e.g. la ε-caprolactone) initiated with one of the above-mentioned polyols; and combinations thereof. Such polyhydric alcohols may be fully or partially esterified (with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acryloyloxy groups per molecule may include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth)acrylate; tripropylene glycol di(meth)acrylate; tetrapropylene glycol di(meth)acrylate; polypropylene glycol di(meth)acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-decanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth)acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth)acrylate; tris (2-hydroxyethyl) isocyanurate tri(meth)acrylate; as well as the alkoxylated (e.g., ethoxylated and/or propoxylated) derivatives thereof; and combinations thereof.

The total amount of (meth)acrylate-functionalized monomer in the curable composition may be from 0.1 to 97 wt%, from 1 to 95 wt%, from 5 to 93 wt%, from 10 to 90 wt%, from 15 to 85 wt%, from 20 to 80 wt%, from 25 to 75 wt%, based on the weight of the curable composition. In one embodiment, the total amount of (meth)acrylate-functionalized monomer in the curable composition may be from 10 to 97 wt%, from 15 to 97 wt%, from 20 to 97 wt%, from 25 to 97 wt%, from 30 to 97 wt%, from 35 to 97 wt%, from 40 to 97 wt%, from 45 to 97 wt%, from 50 to 97 wt%, from 55 to 97 wt%, from 60 to 97 wt%, from 65 to 97 wt%, from 70 to 97 wt%, from 75 to 97 wt%, from 80 to 97 wt%, from 85 to 97 wt% or from 90 to 97 wt%, based on the weight of the curable composition. Alternatively, the total amount of (meth)acrylate-functionalized monomer in the curable composition may be from 0.1 to 50 wt%, from 1 to 50 wt%, from 5 to 50 wt%, from 10 to 50 wt%, from 15 to 50 wt%, from 20 to 50 wt%, from 25 to 50 wt%, from 30 to 50 wt%, based on the weight of the curable composition.

The curable composition may comprise a (meth)acrylate-functionalized oligomer. The curable composition may comprise a mixture of (meth)acrylate-functionalized oligomers.

The (meth)acrylate-functionalized oligomer may be selected in order to enhance the flexibility, strength and/or modulus, among other attributes, of a cured polymer prepared using the curable composition.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), (meth)acrylate-functionalized polyester oligomers (sometimes also referred to as "polyester (meth)acrylate oligomers") and(meth)acrylate-functionalized (meth)acrylic oligomers (sometimes also referred to as "(meth)acrylic (meth)acrylate oligomers"), and mixtures thereof.

Preferably, the curable composition comprises a (meth)acrylate-functionalized oligomer selected from (meth)acrylate-functionalized urethane oligomers, (meth)acrylate-functionalized epoxy oligomers, (meth)acrylate-functionalized polyether oligomers, (meth)acrylate-functionalized polyester oligomers, and mixtures thereof. More preferably, the curable composition comprises a (meth)acrylate-functionalized urethane oligomer, even more preferably an acrylate-functionalized urethane oligomer.

Advantageously, the curable composition comprises a (meth)acrylate-functionalized urethane oligomer having two (meth)acrylate groups, more preferably an acrylate-functionalized urethane oligomer having two acrylate groups.

Exemplary polyester (meth)acrylate oligomers include the reaction products of (meth)acrylic acid (or a synthetic equivalent thereof such as (meth)acryloyl chloride, (meth)acrylic anhydride or a (meth)acrylic ester) with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyhydroxyl-functionalized components (in particular, diols) and poly(carboxylic acid)-functionalized compounds (in particular, dicarboxylic acids and anhydrides). The polyhydroxyl-functionalized compounds and poly(carboxylic acid)-functionalized compounds can each have linear, branched, cycloaliphatic or aromatic structures and can be used individually or as mixtures.

Examples of suitable epoxy (meth)acrylates include the reaction products of (meth)acrylic acid (or a synthetic equivalent thereof such as (meth)acryloyl chloride or (meth)acrylic anhydride) with an epoxy resin comprising at least one epoxide group (in particular at least one group selected from glycidyl ether, glycidyl ester and mixtures thereof). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy I-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable polyether (meth)acrylate oligomers include, but are not limited to, the condensation reaction products of (meth)acrylic acid (or a synthetic equivalent thereof such as (meth)acryloyl chloride, (meth)acrylic anhydride or a (meth)acrylic ester) with hydroxyl group-terminated polyether polyols (such as polyethylene glycol, polypropylene glycol, polytetramethylene glycol and copolymers thereof). Suitable polyether polyols can be linear or branched substances containing ether bonds and terminal hydroxyl groups. Polyether polyols can be prepared by ring opening polymerization of cyclic ethers such as tetrahydrofuran and/or alkylene oxides (e.g., ethylene oxide and/or propylene oxide) with a starter molecule. Suitable starter molecules include water, polyhydroxyl-functionalized materials, polyester polyols and amines.

Suitable urethane (meth)acrylate oligomers include, but are not limited to, urethanes based on at least one polyol, at least one polyisocyanate and least one hydroxyl-functionalized (meth)acrylate.

Urethane (meth)acrylate oligomers may be prepared by reacting a polyisocyanate (e.g. an aliphatic, cycloaliphatic and/or aromatic diisocyanate or triisocyanate) with a polyol (e.g. a polyester polyol, a polyether polyol, a polycarbonate polyol, a polycaprolactone polyol, a polyorganosiloxane polyols or a polydiene polyol such as a polybutadiene polyol, or combinations thereof) to form an isocyanate-functionalized oligomers which are then reacted with a hydroxyl-functionalized (meth)acrylate (such as hydroxyethyl (meth)acrylate) to provide terminal (meth)acrylate groups. For example, the polyurethane (meth)acrylate oligomers may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with a polyol. Alternatively, all the components may be combined and reacted at the same time.

Suitable acrylic (meth)acrylate oligomers include oligomers which may be described as substances having an oligomeric acrylic backbone which is functionalized with one or (meth)acrylate groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

The total amount of (meth)acrylate-functionalized oligomer in the curable composition may be from 0.1 to 97 wt%, from 1 to 95 wt%, from 5 to 93 wt%, from 10 to 90 wt%, from 15 to 85 wt%, from 20 to 80 wt%, from 25 to 75 wt%, based on the weight of the curable composition. In one embodiment, the total amount of (meth)acrylate-functionalized oligomer in the curable composition may be from 10 to 97 wt%, from 15 to 97 wt%, from 20 to 97 wt%, from 25 to 97 wt%, from 30 to 97 wt%, from 35 to 97 wt%, from 40 to 97 wt%, from 45 to 97 wt%, from 50 to 97 wt%, from 55 to 97 wt%, from 60 to 97 wt%, from 65 to 97 wt%, from 70 to 97 wt%, from 75 to 97 wt%, from 80 to 97 wt%, from 85 to 97 wt% or from 90 to 97 wt%, based on the weight of the curable composition. Alternatively, the total amount of (meth)acrylate-functionalized oligomer in the curable composition may be from 0.1 to 50 wt%, from 1 to 50 wt%, from 5 to 50 wt%, from 10 to 50 wt%, from 15 to 50 wt%, from 20 to 50 wt%, from 25 to 50 wt%, from 30 to 50 wt%, based on the weight of the curable composition.

In one embodiment, the curable composition comprises an amine-modified acrylate or thiol-modified acrylates. The ethylenically unsaturated compound may comprise a mixture of amine-modified acrylates or thiol-modified acrylates.

An amine-modified acrylate, respectively a thio-modified acrylate, is obtained by reacting an acrylate-functionalized compound with an amine-containing compound, respectively a thiol-containing compound. The amine-modified acrylate, respectively thio-modified acrylate, comprises at least one remaining acrylate group (i.e. an acrylate group that has not reacted with the amine-containing compound, respectively the thiol-contiaing compound) and/or at least one (meth)acrylate group (which may not be reactive towards primary or secondary amines, respectively thiols).

The acrylate-functionalized compound may be an acrylate-functionalized monomer and/or acrylate-functionalized oligomer as defined above.

The amine-containing compound comprises a primary or secondary amino group and optionally a tertiary amino group. The thiol-containing compound comprises a thiol group (-SH). The amine-containing compound may comprise more than one primary and/or secondary amino groups. The thiol-containing compound may comprise more than one thiol groups. The amine-containing compound may be selected from monoethanolamine (2-aminoethanol), 2-ethylhexylamine, octylamine, cyclohexylamine, sec-butylamine, isopropylamine, diethylamine, diethanolamine, dipropylamine, dibutylamine, 2-(methylamino)ethano-1,2-methoxyethylamine, bis(2-hydroxypropyl)amine, diisopropylamine, dipentylamine, dihexylamine, bis(2-ethylhexyl)amine, 1,2,3,4-tetrahydroisoquinoline, N-benzylmethylamine, morpholine, piperidine, dioctylamine, and dicocoamine, dimethylaminopropylamine, dimethylaminopropylaminopropylamine, 1,4-bis(3-aminopropyl)piperazine, 1,3-bis(aminomethyl)cyclohexane, 1,4-bis(3-aminopropyl)piperazine, aniline and an optionally substituted benzocaine (ethyl-4-aminobenzoate).

Examples of commercially available amine-modified acrylates include CN3705, CN3715, CN3755, CN381 and CN386, all available from Arkema. Polymeric or multi-amino versions are also suitable.

The curable composition may comprise from 0% to 25%, in particular 2.5% to 20%, more particularly 5 to 15%, by weight of amine-modified acrylate based on the total weight of the composition.

In a particularly preferred embodiment, the (meth)acrylate-functionalized compound of the curable composition comprises one or more (meth)acrylate-functionalized monomers having from 1 to 6 (meth)acrylate groups per molecule, optionally in combination with one or more (meth)acrylate-functionalized oligomers containing two or more (meth)acrylate groups per molecule selected from the group consisting of (meth)acrylate-functionalized urethane oligomers, (meth)acrylate-functionalized epoxy oligomers, (meth)acrylate-functionalized polyether oligomers, (meth)acrylate-functionalized polyester oligomers, and mixtures thereof.

Preferably, the total amount of (meth)acrylate-functionalized compound in the curable composition may be from 0.1 to 97 wt%, from 1 to 95 wt%, from 5 to 93 wt%, from 10 to 90 wt%, from 15 to 85 wt%, from 20 to 80 wt%, from 25 to 75 wt%, based on the weight of the curable composition. In one embodiment, the total amount of (meth)acrylate-functionalized compound in the curable composition may be from 10 to 97 wt%, from 15 to 97 wt%, from 20 to 97 wt%, from 25 to 97 wt%, from 30 to 97 wt%, from 35 to 97 wt%, from 40 to 97 wt%, from 45 to 97 wt%, from 50 to 97 wt%, from 55 to 97 wt%, from 60 to 97 wt%, from 65 to 97 wt%, from 70 to 97 wt%, from 75 to 97 wt%, from 80 to 97 wt%, from 85 to 97 wt% or from 90 to 97 wt%, based on the weight of the curable composition. Alternatively, the total amount of (meth)acrylate-functionalized compound in the curable composition may be from 0.1 to 50 wt%, from 1 to 50 wt%, from 5 to 50 wt%, from 10 to 50 wt%, from 15 to 50 wt%, from 20 to 50 wt%, from 25 to 50 wt%, from 30 to 50 wt%, based on the weight of the curable composition.

The curable composition may contain ethylenically unsaturated compounds other than (meth)acrylate-functionalized compounds. Examples of such compounds include allyl-functionalized compounds, vinyl-functionalized compounds, alkenes (such as 1,1-diester-1-alkenes, 1,1-diketo-1-alkenes, 1-ester-1-keto-1-alkenes, 1,1-diamide-1-alkenes, 1-amide-1-keto-1-alkenes, 1-amide-1-ester-1-alkenes and/or itaconates) and combinations thereof.

The relative proportions of the ethylenically unsaturated compounds other than (meth)acrylate-functionalized compounds and the (meth)acrylate-functionalized compounds may be varied as may be appropriate depending upon the particular components selected and the properties of the curable composition and the cured composition obtained therefrom which are desired. For example, the total weight of ethylenically unsaturated compounds (including the (meth)acrylate-functionalized compounds) in the curable composition may be from 0.1 to 97 wt%, from 1 to 95 wt%, from 5 to 93 wt%, from 10 to 90 wt%, from 15 to 85 wt%, from 20 to 80 wt%, from 25 to 75 wt%, based on the weight of the curable composition. In particular, the total weight of ethylenically unsaturated compounds (including the (meth)acrylate-functionalized compounds) in the curable composition may be from 10 to 97 wt%, from 15 to 97 wt%, from 20 to 97 wt%, from 25 to 97 wt%, from 30 to 97 wt%, from 35 to 97 wt%, from 40 to 97 wt%, from 45 to 97 wt%, from 50 to 97 wt%, from 55 to 97 wt%, from 60 to 97 wt%, from 65 to 97 wt%, from 70 to 97 wt%, from 75 to 97 wt%, from 80 to 97 wt%, from 85 to 97 wt% or from 90 to 97 wt%, based on the weight of the curable composition.

### HALS

The curable composition of the invention further comprises a hindered amine light stabilizer (also referred to as HALS). The curable composition may comprise a mixture of HALS.

The HALS of the curable compositions described herein may be used to provide an antimicrobial coating on a substrate via curing of the composition followed by conversion of the HALS to a N-halo-hindered amine (halamine).

The conventional art has focused on halamines as monomers that can be pre-reacted onto polymers as opposed to the use of a HALS as a "non-reactive" additive. In an exemplary embodiment, the HALS used in present invention is an established additive used in photo-curable resins to improve weatherability and UV degradation. For the purpose of present invention, however, the HALS is not pre-reacted with the curable composition prior to polymerization, and the halamine is formed during a halogenation step after curing has occurred.

A HALS can be any suitable secondary hindered amine compound (i.e. a hindered amine compound having a hydrogen atom bonded to the nitrogen atom of the amine group). As utilized herein, the term "hindered amine" refers to a compound or moiety in which the carbon atoms adjacent to the nitrogen atom of the amine group do not have a hydrogen atom attached directly thereto. Preferably, the carbon atoms adjacent to the nitrogen atom of the hindered amine compound or moiety are not carbonyl carbons (i.e., a carbon atom having an oxygen atom double bonded thereto).

A halamine may be a hindered amine as defined above wherein the amine group is substituted with a halogen atom, in particular a chlorine, bromine or iodine atom. A halamine may be obtained by replacing the hydrogen atom attached to the amine group of the HALS with a halogen atom (e.g. by a halogenation reaction).

The HALS and halamine can have any suitable molecular weight. Typically, the HALS and halamine has a molecular weight of about 2,500 atomic mass units or less, preferably about 2,000 atomic mass units or less, or about 1,000 atomic mass units or less, or about 500 atomic mass units or less.

In an exemplary embodiment, the HALS contains functional groups that cause the HALS to react during the curing process. In another exemplary embodiment, the HALS does not contain functional groups that causes the HALS to crosslink during the curing process.

In an exemplary embodiment, the HALS can be added to monomers, oligomers, or a combination of both and the resulting compositions are then shipped offsite for curing to provide anti-microbial resins, such as for coatings.

Suitable HALS include, but are not limited to, the hindered amines disclosed in WO 2007/050245, which is incorporated by reference in its entirety. Exemplary chemical structures of the hindered amines disclosed in WO 2007/050245 are shown below: 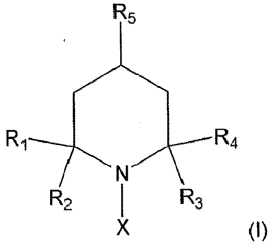 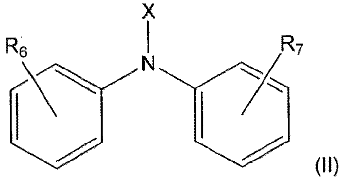 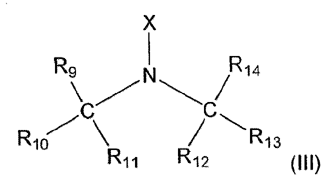 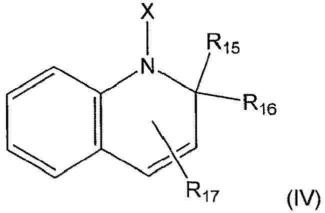 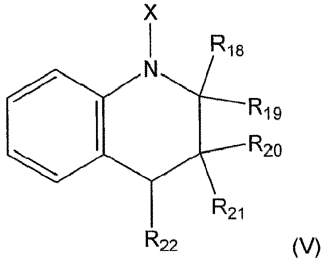 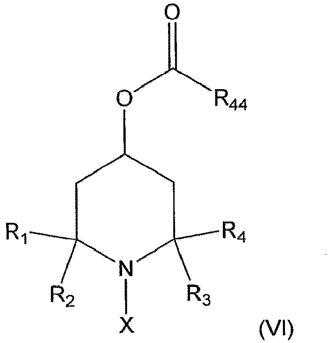 wherein: R₁, R₂, R₃, and R₄ are independently selected from the group consisting of C₁-C₄ alkyl groups; R₅ is selected from the group consisting of a hydrogen atom, an alkyl group, an alkyl amine group, a cyclic amine group, an amide group, a cyclic amide group, an isocyanate group, a hydroxyl group, an ether group, an ester group, and combinations thereof; R₆ and R₇ are independently selected from the group consisting of a hydrogen atom, an alkyl group, an aryl group, an amine group, an amide group, and combinations thereof; R₉, R₁₁, R₁₂, and R₁₄ are independently selected from the group consisting of C₁-C₄ alkyl groups; R₁₀ and R₁₃ are independently selected from the group consisting of an alkyl group, an aryl group, an amine group, an amide group, and combinations thereof; R₁₅ and R₁₆ are independently selected from the group consisting of C₁-C₄ alkyl groups; R₁₇ is selected from the group consisting of a hydrogen atom, an alkyl group, an aryl group, an amine group, an amide group, and combinations thereof; R₁₈, R₁₉, R₂₀, and R₂₁ are independently selected from the group consisting of C₁-C₄ alkyl groups; R₂₂ is selected from the group consisting of a hydrogen atom, an alkyl group, an aryl group, an amine group, an amide group; R₄₄ is a C₁₁-C₂₀ alkyl group; and X is a hydrogen atom.

In various exemplary embodiments, suitable HALS include, but are not limited to, 2,2,6,6-tetramethylpiperidine; 4-chloro-2,2,6,6-tetramethylpiperidine; 4-bromo-2,2,6,6-tetramethylpiperidine; 2,2,6,6-tetramethyl-piperidin-4-ol; 4-isocyanato-2,2,6,6-tetramethylpiperidine; N-butyl-2,2,6,6-tetramethylpiperidin-4-amine; 4,4-bis[(tert-butyl)dioxy]-2,2,6,6-tetramethylpiperidine; N,N-bis-(2,2,6,6-tetramethyl-piperidin -4-yl)-propane-1,3-diamine; N,N-bis-(2,2,6,6-tetramethyl-piperidin-4-yl)-hexane-1,6-diamine; N¹-(2,2,6,6-tetramethyl-piperidin-4-yl)-hexane-1,6-diamine; 2,2,6,6-tetramethylpiperidin-4-yl benzoate; bis(2,2,6,6-tetramethyl-4-piperidyl) succinate; 3-dodecyl-1-(2,2,6,6-tetramethyl-piperidin-4-yl)-pyrrolidine-2,5-dione; 1,5-dioxaspiro[5.5]undecane-3,3-dicarboxylic acid bis(2,2,6,6-tetramethyl-piperidin-4-yl)ester; 2,6-bis-(2,2,6,6-tetramethyl-piperidin-4-yl)-hexahydro-2,3a,4a,6,7a,8a-hexaaza-cyclopenta[delfluorine-4,8-dione; N,N'-bis(2,2,6,6-tetramethylpiperidin-4-yl)-N,N'-diformyl-1,6-diaminohexane; 2,2,6,6-tetramethyl-4-piperidinecarboxylic acid 1,4-cyclohexanediylbis(methylene)ester; 2,2,6,6-tetramethyl-piperidin-4-yl methacrylate; methyl-[3-(2,2,6,6-tetramethyl-piperidin-4-yloxy)-propyl]-silanediol; N-(2,2,6,6-tetramethyl-piperidin-4-yl)stearamide; bis(2,2,6,6-tetramethyl-piperidin-4-yl) sebacate; bis(1,2,2,6,6-pentamethyl-piperidin-4-yl) sebacate; methyl-1,2,2,6,6-pentamethyl-piperidin-4-yl sebacate; 4-hydroxy-2,2,6,6-tetramethyl-piperidine-4-carboxylic acid; heptadecanoic acid 2,2,6,6-tetramethyl-piperidin-4-yl ester; N,N'-1,6-hexanediylbis[N-(2,2,6,6-tetramethyl-piperidin-4-yl)-formamide; N,N'-bis(1,1,3,3-tetramethylbutyl)-2,9,15,22-tetrakis(2,2,6,6-tetramethyl-piperidin-4-yl)-2,9,11,13,15,22,24,26,27,28-decaazatricyclo[21.3.1.1^{10,14}]octacosa-1(27),10,12,14(28),23,25-hexaene-12,25-diamine; poly[(6-morpholino-s-triazine-2,4-diyl)[(2,2,6,6-tetramethyl-piperidin-4-yl)imino]-hexamethylene[(2,2,6,6-tetramethyl-piperidin-4-yl)imino)]]; CYASORB^{®} UV-3853; poly[(6-morpholino-s-triazine-2,4-diyl)[(2,2,6,6-tetramethyl-piperidin-4-yl)imino]-hexamethylene[(2,2,6,6-tetramethyl-piperidin-4-yl)imino)]]; N-phenylnaphthalen-1-amine; N-phenylnaphthalen-2-amine; bis-[4-(1-phenylethyl)-phenyl]-amine; N-(1,3-dimethylbutyl)-N'-phenylbenzene-1,4-diamine; 4-methylphenyl(4-anilinophenyl)amidosulfite; 2,2-dimethyl-1,2-dihydroquinoline, 2,2,4-trimethyl-1,2-dihydroquinoline, 2,2,3,3-tetramethyl-1,2,3,4-tetrahydroquinoline, 2,2,3,3,4-pentamethyl-1,2,3,4-tetrahydroquinoline; and combinations thereof.

A preferred HALS is TINUVIN^{®} 770 (bis(2,2,6,6,-tetramethyl-4-piperidyl) sebacate) by BASF.

In an exemplary embodiment, the HALS is present in the curable composition in an amount such that the cured resin composition exhibits antimicrobial properties when the HALS is converted to a N-halo-hindered amine by treatment with a halogenating agent, such as a N-chloro-hindered amine (NCHA) by treatment with a chlorinating agent, or such as a N-bromo-hindered amine by treatment with a brominating agent, or such as a N-iodo-hindered amine by treatment with an iodinating agent. In an exemplary embodiment, the halogenating agent is an aqueous solution of a hypohalite (e.g., an aqueous hypochlorite-containing solution containing from about 0.001% to about 1% by weight of a hypochlorite, such as sodium hypochlorite) or other dilute oxidative halogenated solutions.

In an exemplary embodiment, the total amount of HALS in the curable composition is at least 3 wt %, in particular at least 4 wt %, at least 5 wt %, at least 6 wt %, at least 7 wt %, or at least 8 wt %, based on the total weight of the curable composition. In an exemplary embodiment, the total amount of HALS in the curable composition is from 3 to 30 wt%, in particular from 3 to 25 wt%, from 3 to 20 wt%, from 3 to 15 wt%, from 3 to 10 wt%, from 4 to 30 wt%, from 4 to 25 wt%, from 4 to 20 wt%, from 4 to 15 wt%, from 4 to 10 wt%, from 5 to 30 wt%, from 5 to 25 wt%, from 5 to 20 wt%, from 5 to 15 wt%, from 5 to 10 wt%, from 6 to 30 wt%, from 6 to 25 wt%, from 6 to 20 wt%, from 6 to 15 wt%, from 6 to 10 wt%, from 7 to 30 wt%, from 7 to 25 wt%, from 7 to 20 wt%, from 7 to 15 wt% or from 7 to 10 wt%, based on the total weight of the curable composition.

In an embodiment of the invention, the HALS may be capable of forming covalent bonds within the cured composition (in other words, the HALS may be capable of reacting with the (meth)acrylate-functionalized compounds during curing of the composition. In particular, the HALS may be an ethylenically unsaturated HALS.

In another embodiment, the HALS may not be capable of forming covalent bonds within the cured composition (in other words, the HALS may not be capable of reacting with the (meth)acrylate-functionalized compounds during curing of the composition. In particular, the HALS may be a non-ethylenically unsaturated HALS.

In an embodiment of the invention, the HALS is capable of forming covalent bonds within the cured composition and the total amount of HALS in the curable composition is from 10 to 30 wt%, from 12.5 to 30 wt%, from 15 to 30 wt%, or from 20 to 30 wt%, based on the total weight of the curable composition. In another embodiment, the HALS is not capable of forming covalent bonds within the cured composition and the total amount of HALS in the curable composition is from 3 to 15 wt%, from 3 to 12 wt%, from 3 to 10 wt%, or from 4 to 10 wt%, based on the total weight of the curable composition.

In an embodiment of the invention, the HALS may be capable of being crosslinked into the cured composition. In particular, the HALS may be a polyethylenically unsaturated HALS, i.e. a HALS comprising more than one ethylenically unsaturated functional groups, such as vinyl, allyl and (meth)acrylate. More particularly, the HALS may be a poly(meth)acrylate-containing HALS.

The total amount of poly(meth)acrylate-containing HALS in the curable composition may be at least than 10 wt%, in particular from 10 to 30 wt%, from 12.5 to 30 wt%, from 15 to 30 wt%, or from 20 to 30 wt% based on the total weight of the curable composition.

In an embodiment of the invention, the HALS may be capable of forming covalent bonds within the cured composition, preferably without being crosslinked into the cured composition. For example, the coating may be crosslinked, but not by the HALS compound, which merely reacts into and becomes part of the coating. In particular, the HALS may be a monoethylenically unsaturated HALS, i.e. a HALS comprising a single ethylenically unsaturated functional group, such as vinyl, allyl and (meth)acrylate. More particularly, the HALS may be a mono(meth)acrylate-containing HALS. An example of a suitable mono(meth)acrylate-containing HALS is 2,2,6,6-tetramethyl-4-piperidyl (meth)acrylate. Even more particularly, the mono(meth)acrylate-containing HALS is 2,2,6,6-tetramethyl-4-piperidyl methacrylate.

The total amount of mono(meth)acrylate-containing HALS in the curable composition may be at least 10 wt%, in particular from 10 to 30 wt%, from 12.5 to 30 wt%, from 15 to 30 wt%, or from 20 to 30 wt% based on the total weight of the curable composition.

In an embodiment of the invention the HALS may not be capable of forming covalent bonds within the cured composition. In particular, the HALS may be a non-ethylenically unsaturated HALS, i.e. a HALS which is devoid of any ethylenically unsaturated functional group, such as vinyl, allyl and (meth)acrylate. More particularly, the non-ethylenically unsaturated HALS may be bis(2,2,6,6-tetramethyl-4-piperidyl)sebacate (Tinuvin^{®} 770).

The total amount of non-ethylenically unsaturated HALS in the curable composition may be at least 3 wt%, in particular from 3 to 15 wt%, from 3 to 12 wt%, from 3 to 10 wt%, or from 4 to 10 wt% based on the total weight of the curable composition.

### Additives

The curable composition may further comprise one or more of additives that include, but are not limited to, photoinitiators, antioxidants, ultraviolet absorbers, photostabilizers, foam inhibitors, solvents, flow or leveling agents, colorants, adhesion promoters, pigments, dispersants (wetting agents), slip additives, fillers, thixotropic agents, matting agents, thermoplastics such as acrylic resins that do not contain any free radical-polymerizable functional groups, waxes or other various additives, including any of the additives conventionally utilized in the coating, sealant, adhesive, molding or ink arts.

In certain embodiments of the invention, the curable compositions described herein include at least one photoinitiator. A photoinitiator may be considered as any type of substance that, upon exposure to radiation (e.g., actinic radiation), forms species that initiate the reaction and curing of polymerizing organic substances present in the curable composition.

Free radical polymerization initiators are substances that form free radicals when irradiated. The use of free radical photoinitiators is especially preferred. Non-limiting types of free radical photoinitiators suitable for use in the curable compositions of the present invention include, for example, benzoins, benzoin ethers, acetophenones, benzyl, benzyl ketals, anthraquinones, phosphine oxides, α-hydroxyketones, phenylglyoxylates, α-aminoketones, benzophenones, thioxanthones, xanthones, acridine derivatives, phenazene derivatives, quinoxaline derivatives and triazine compounds.

Suitable photoinitiators include those capable of generating free radicals when exposed to the requisite radiation, such as UV energy. In an exemplary embodiment, the photoinitiators include acyl phosphine oxides (*e.g.,* Irgacure^{®} 819, Lucirin^{®} TPO and Lucirin^{®} TPO-L); benzil ketals *(e.g.,* Irgacure 651); alpha-hydroxy phenyl ketones e.g., Irgacure 184 or Darocur 1173) or mixtures thereof.

The amount of photoinitiator may be varied as may be appropriate depending upon the photoinitiator(s) selected, the amounts and types of polymerizable species present in the curable composition, the radiation source and the radiation conditions used, among other factors. Typically, however, the amount of photoinitiator may be from 0.05% to 5%, preferably 0.1% to 2% by weight, based on the total weight of the curable composition.

Suitable solvents are any solvents that will dissolve all other components in the curable composition and include aliphatic or aromatic hydrocarbons (e.g., hexane, toluene or xylene), alcohols *(e.g.,* ethanol or propylene glycol), esters *(e.g.,* ethyl acetate, n-butyl acetate), ketones *(e.g.,* acetone, methyl isobutyl ketone or methyl ethyl ketone) and ethers (e.g., propylene glycol methyl ether or dimethoxyethane). In other embodiments, however, the curable compositions of the present invention may be formulated to be solvent-free, i.e., free of any non-reactive volatile substances (substances having a boiling point at atmospheric pressure of 150°C or less). For example, the curable compositions of the present invention may contain little or no non-reactive solvent, e.g., less than 10% or less than 5% or less than 1% or even 0% of a non-reactive solvent, based on the total weight of the curable composition.

Suitable adhesion promoters include silanes, titanates, zirconates and polyolefins.

Suitable wetting agents include alkoxylated surfactants, silicone surfactants, sulfosuccinates and fluorinated polyacrylates.

Suitable ultraviolet absorbers include benzophenones (such as benzophenone and hydroxybenzophenone), benzotriazoles (such as hydroxyphenyl benzotriazole), hydroxyphenyl triazines (such as oxanilide) and thioxanthone.

Generally speaking, if the curable compositions of the present invention are to be stored for a length of time before being used, it is desirable to include one or more stabilizers in order to provide adequate storage stability and shelf life. As used herein, the term "stabilizer" means a compound or substance which retards or prevents reaction or curing of (meth)acrylate functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). Typically, effective stabilizers for purposes of the present invention will be classified as free radical stabilizers (i.e., stabilizers which function by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized.

The concentration of stabilizer in the curable composition will vary depending upon the particular stabilizer or combination of stabilizers selected for use and also on the degree of stabilization desired and the susceptibility of components in the curable compositions towards degradation in the absence of stabilizer. Typically, however, the curable composition is formulated to comprise from 50 to 5000 ppm stabilizer.

### Method of protecting a surface of a substrate

The invention relates to a method of protecting a surface of a substrate. The method of the invention comprises an application step, a curing step and a halogenation step as detailed below. The method of the invention may further comprise an optional step of removing any residual halogenating agent.

In an embodiment of the invention, the application step, the curing step and the halogenation step may be repeated so that the substrate contains two or more layers of the cured composition.

The method of the invention may be used to provide a protective coating on the surface of a substrate. The protective coating may advantageously exhibit one or more (or two or more, or three or more, or four or more) of the following properties: microbial-resistant (in other word antimicrobial), photo-resistant, thermally-resistant, impact-resistant, scratch-resistant and chemically-resistant. Preferably, the protective coating is a microbial-resistant (or antimicrobial) protective coating.

The protective coating may be a clearcoat coating.

The protective coating may have a thickness in the range of 5 to 250 µm, such as 5 to 225 µm, such as 5 to 200 µm, such as 5 to 175 µm, such as 5 to 150 µm.

### Application step

The method of the invention comprises a step of applying the curable composition as described above on a surface of a substrate.

The curable composition may be applied to a substrate surface in any known conventional manner, for example, by spraying, by brush, by sponge, by knife coating, by roller coating, by casting, by drum coating, by dipping, by curtain coating, by screen printing or by other methods of image transfer, by coating transfer, and the like and combinations thereof. Indirect application using a transfer process may also be used.

In an embodiment, the curable composition may be applied directly to a substrate or over one or more of a primer, a basecoat system or other suitable layers in order to achieve the desired final appearance and properties. For example, the curable composition can be applied over a waterborne basecoat or a solvent-borne basecoat.

The substrate may be any commercially relevant substrate, such as a high surface energy substrate or a low surface energy substrate, such as a metal substrate or plastic substrate, respectively. The substrate may comprise one or more of metal, paper, paperboard, cardboard, glass, plastics (e.g., thermoplastics such as polyolefins, polycarbonate, acrylonitrile butadiene styrene (ABS), and blends thereof), composites, wood, leather, carbon fiberglass, nonwovens, ceramics (e.g., granite, marble), pigmented coatings, concrete, and combinations thereof.

In an embodiment of the invention, the curable composition may be applied on the surface of the substrate so as to provide a dry film thickness in the range of 5 to 250 µm, such as 5 to 225 µm, such as 5 to 200 µm, such as 5 to 175 µm, such as 5 to 150 µm.

### Curing step

The method of the invention comprises a step of curing the curable composition as described above to provide a cured composition.

Curing of the curable composition in accordance with the present invention may be carried out by any suitable method, such as free radical, cationic and/or anionic polymerization. One or more initiators, such as a free radical initiator (e.g., a photoinitiator or a peroxide initiator) may be present in the curable composition.

Curing may be accelerated or facilitated by supplying energy to the curable composition, such as by exposing the composition to a radiation source, such as visible light, UV energy and/or an electron beam. Thus, the cured composition may be deemed to be the reaction product of the curable composition, formed by curing.

The curing step of the method of the invention may comprise one of: (1) exposing the curable composition to UV energy and/or visible light; (2) exposing the curable composition to an electron beam, (3) initiating polymerization through the use of a redox-generated radical; (4) initiating polymerization through the use of a thermally-generated radical, or a combination thereof.

The curable compositions of the present invention are particularly well suited to being cured using LED (Light Emitting Diode) curing (e.g., UV LED curing, using radiation from a UV LED device) and for use in high speed applications (such as coatings).

A plurality of layers of a composition in accordance with the present invention may be applied to a substrate surface; the plurality of layers may be simultaneously cured (by exposure to a single dose of radiation, for example) or each layer may be successively cured before application of an additional layer of the composition.

The curable composition may be cured by exposing the composition to actinic radiation, in particular UV energy and/or visible light.

In particular, the curable composition may be cured by exposing the curable composition to UV energy. The UV energy may be in a range of 200 to 400 nm. The UV energy may be provided by one or more UV lamps delivering an irradiance level of 0.01 to 10 W/cm², such as 1 to 10 W/cm², for a time between 1 second and 30 minutes, such as between 1 second and 10 minutes.

More particularly, the curable composition may be cured by exposing the curable composition to UVC energy, UVB energy, UVA energy and/or visible light. In an exemplary embodiment, the curable composition is cured with a UV energy source utilizing UVA/UVB energy or UVA energy only and involves essentially no UVC energy. In an exemplary embodiment, the curable composition is cured with high energy radiation, ranging from 0.01 to 10 W/cm². Possible light sources include, but are not limited to, natural outdoor light, black light, fluorescent light, LED, or high pressure mercury light.

The curable composition may be cured by exposing the curable composition to an electron beam. The electron beam may, in one embodiment, be provided by an E-BEAM Services apparatus delivering an energy of 2 megarads.

The curable composition may be cured by free radical polymerization.

In particular, the curable composition may be cured by initiating polymerization through the use of a thermally-generated radical (also referred to as thermal curing). For example, the curable composition may comprise a radical initiator, such as a peroxide initiator, which is activated by heating. Examples of suitable peroxide initiators include, but are not limited to, hydrogen peroxide, benzoyl peroxide or t-butyl hydroperoxide.

Alternatively, the curable composition may be cured by initiating polymerization through the use of a redox-generated radical (also referred to as two-step redox curing). For example, the curable composition may comprise a radical initiator (such as a peroxide as described above) and a reducing agent (e.g., a tertiary amine such as N,N-dimethylaniline, N-(4-methoxyphenyl)pyrrolidine and N-phenyldiethanol amine, sodium sulfite, sodium metabisulfite). The radical initiator may be activated by the reducing agent.

Preferably, the curable composition is not cured by thermal curing.

In an embodiment of the invention, the cured composition is present as a coating, either alone or as a component in a coating composition, on the substrate in a thickness range of 5 to 250 µm, such as 5 to 225 µm, such as 5 to 200 µm, such as 5 to 175 µm, such as 5 to 150 µm.

In an embodiment of the invention, the cured composition is a clearcoat coating on the surface of the substrate.

### Halogenation step

The method of the invention comprises a step of treating the cured composition as defined above with a halogenating agent to halogenate the HALS present in the cured composition.

The halogenation of the HALS leads to the formation of a N-halo-hindered amine (halamine) in the cured composition. The presence of a halamine in the cured composition may advantageously confer antimicrobial properties to the cured composition.

Two approaches can typically be used to create halamines from HALS: halogenating the HALS before its incorporation into a curable composition or halogenating the HALS present in a cured composition (in other words the HALS is present in the curable composition prior to curing).

In the method of the present invention, the HALS is present in the cured composition and the halogenation can be carried out by any suitable means, such as by spraying, submerging, or wiping the surface of the cured composition with a halogenating agent, optionally in a diluted form as desired. In the method of the invention, the HALS preferably not halogenated before its incorporation into the curable composition.

Suitable halogenating agents include, but are not limited to, chlorinating agents such as hypochlorites (e.g., calcium hypochlorite, lithium hypochlorite and sodium hypochlorite), trichloroisocyanuric acid and dichloroisocyanurates (e.g., potassium dichloroisocyanurate and sodium dichloroisocyanurate) and iodinating agents such as povidone-iodine (Betadine^{®}). In an embodiment, the halogenating agent is used in stoichiometric excess as measured by the amount of HALS present in the curable composition, such as at least a 10% molar excess, at least a 30% molar excess, at least a 50% molar excess, at least a 100% molar excess, or at least a 200% molar excess.

In an embodiment of the invention, the halogenating agent is a chlorinating agent, in particular sodium hypochlorite, more particularly a sodium hypochlorite solution (also commonly referred to as bleach), even more particularly a 5.25 - 8.25 % w/w sodium hypochlorite solution in water which may be commercially from Chlorox^{®}.

In an embodiment of the invention, the sodium hypochlorite is further diluted from its original commercial form such as by the addition of water. In an embodiment, the sodium hypochlorite is present as household bleach (5.25 - 8.25 % w/w sodium hypochlorite in water) that has been diluted by at least 10% water, such as by least 20% water, such as by at least 30% water, such as by at least 40% water, such as by at least 50% water.

In another embodiment, the halogenating agent is an iodinating agent such as Betadine^{®} (povidone-iodine).

In an exemplary embodiment, after treatment of the composition with a halogenating agent, the method may comprises an optional step of removing any residual halogenating agent. For example, the cured composition may be contacted with water, either directly (e.g., spraying) or indirectly (e.g., by wiping with a wet cloth or sponge) in an amount sufficient to remove any residual halogenating agent.

In an exemplary embodiment, a zinc iodide (Znl)/starch indicator was used to detect the presence of halamines in the cured composition after treatment of the composition with a halogenating agent. In an exemplary embodiment, a cotton swab was saturated with the Znl/starch indicator and rubbed across the treated surface. The solution on the swab changed from clear to dark blue/purple in the presence of chlorine. Other methods of detection of halamines known in the art, such as detection by titration techniques, are also suitable.

A wide variety of hindered amines can be evaluated for antimicrobial activity, along with the concentration needed to promote said activity. Log₁₀ data is used to characterize the antimicrobial properties of a halamine-containing cured composition and to identify which compositions may be suitable for antimicrobial applications. In an exemplary embodiment, JIS Z 2801:2010 was used to quantify the Log₁₀ reduction for gram-positive and gram-negative bacteria. In an embodiment, at least a 1,000-fold reduction in the counts of at least one of *Staphylococcus aureus* and *E. coli* (i.e., 3 log-10 reduction) was observed.

In an embodiment of the invention, the substrate surface is periodically treated with a halogenating agent as needed, depending on the application (such as once or multiple times each day, or once each week, or once each month or once each two months) to restore and/or enhance the antimicrobial activity of the surface on which the cured composition is present.

In an embodiment of the invention, the surface of the substrate containing the cured composition exhibits substantially improved antimicrobial properties compared to a surface of the substrate coated with the same curable composition not containing HALS.

In an embodiment of the invention, the surface of the substrate retains over 50% of its antimicrobial properties (based on the concentration of halogen remaining in the coating present as a halogenated HALS) for up to 3 weeks or up to 4 weeks or up to 5 weeks or up to 6 weeks after the step of treating the cured composition with a halogenating agent.

### Other methods, compositions and uses

The invention also relates to a method of treating a cured composition with a halogenating agent to halogenate a HALS present in the cured composition wherein the cured composition comprises a cured product of a curable composition comprising a HALS and a (meth)acrylate-functionalized compound. The curable composition may be as defined above.

The invention also relates to a cured composition comprising a N-halo-hindered amine, wherein the cured composition is obtained by (a) curing a curable composition as defined above; and (b) then converting the HALS to a N-halo-hindered amine by treating the HALS with a halogenating agent

The invention also relates to the use of at least one HALS, at least one (meth)acrylate-functionalized compound and at least one halogenating agent to obtain an antimicrobial coating on a surface of a substrate . The antimicrobial properties of a coating can be determined according to JIS Z 2801:2010 as detailed above. For example, an antimicrobial coating may exhibit at least a 1,000-fold reduction in the counts of at least one of *Staphylococcus aureus* and *E. coli* (i.e., 3 log-10 reduction) compared to a coating that does not comprise any HALS or halamine.

### Aspects of the Invention

Illustrative non-limiting embodiments of the present invention may be summarized as follows:
Aspect 1: A method for protecting a surface of a substrate, the method comprising: - applying a curable composition comprising a (meth)acrylate-functionalized compound and a hindered amine light stabilizer (HALS) on a surface of a substrate ;
   - curing the curable composition to provide a cured composition;
   - treating the cured composition with a halogenating agent to halogenate the HALS present in the cured composition; and
   - optionally removing any residual halogenating agent.
Aspect 2: The method of Aspect 1, wherein the cured composition treated with the halogenating agent provides a protective coating on the surface of the substrate.
Aspect 3: The method of Aspect 2, wherein the protective coating exhibits one or more (or two or more, or three or more, or four or more) of the following properties: microbial-resistant, photo-resistant, thermally-resistant, impact-resistant, scratch-resistant and chemically-resistant; preferably, the protective coating is a microbial-resistant (or antimicrobial) protective coating.
Aspect 4: The method of Aspect 2 or 3, wherein the protective coating is a clearcoat coating.
Aspect 5: The method of any one of Aspects 2-4, wherein the protective coating has a thickness in the range of 5 to 250 µm, such as 5 to 225 µm, such as 5 to 200 µm, such as 5 to 175 µm, such as 5 to 150 µm.
Aspect 6: The method of any of Aspects 1-5, wherein the curing comprises one of: (1) exposing the curable composition to UV energy and/or visible light; (2) exposing the curable composition to an electron beam, (3) initiating polymerization through the use of a redox-generated radical; or (4) initiating polymerization through the use of a thermally-generated radical.
Aspect 7: The method of any of Aspects 1-6, wherein the curable composition is cured by exposing the curable composition to UV energy.
Aspect 8: The method of any of Aspects 1-7, wherein the curable composition is cured by exposing the curable composition to visible light.
Aspect 9: The method of any of Aspects 1-6, wherein the curable composition is cured by exposing the curable composition to an electron beam.
Aspect 10: The method of any of Aspects 1-6, wherein the curable composition is cured by initiating polymerization through the use of a redox-generated radical.
Aspect 11: The method of any of Aspects 1-6, wherein the curable composition is cured by initiating polymerization through the use of a thermally-generated radical.
Aspect 12: The method of any of Aspects 1-10, wherein the curable composition is not cured by initiating polymerization through the use of a thermally-generated radical.
Aspect 13: The method of any of Aspects 1-12, wherein the halogenating agent is selected from chlorinating agents such as hypochlorites (e.g., calcium hypochlorite, lithium hypochlorite and sodium hypochlorite), trichloroisocyanuric acid and dichloroisocyanurates (e.g., potassium dichloroisocyanurate and sodium dichloroisocyanurate) and iodinating agents such as povidone-iodine (Betadine^{®}).
Aspect 14: The method of any of Aspects 1-13, wherein the halogenating agent is a chlorinating agent, in particular sodium hypochlorite, more particularly a sodium hypochlorite solution.
Aspect 15: The method of any of Aspects 1-14, wherein the curable composition comprises a HALS that is capable of being crosslinked into the cured composition.
Aspect 16: The method of any of Aspects 1-14, wherein the curable composition comprises a HALS that is capable of forming covalent bonds within the cured composition, preferably without being crosslinked into the cured composition.
Aspect 17: The method of Aspect 16, wherein the HALS is an ethylenically unsaturated HALS, in particular 2,2,6,6-tetramethyl-4-piperidyl (meth)acrylate.
Aspect 18: The method of any of Aspects 1-14, wherein the curable composition comprises a HALS that is not capable of forming covalent bonds within the cured composition.
Aspect 19: The method of Aspect 18, wherein the HALS is a non-ethylenically unsaturated HALS, in particular bis(2,2,6,6-tetramethyl-4-piperidinyl) sebacate.
Aspect 20: The method of any of Aspects 1-19, wherein the total amount of HALS in the curable composition is at least 3 wt% relative to the total weight of the composition, in particular from 3 to 30 wt%, from 3 to 25 wt%, from 3 to 20 wt%, from 3 to 15 wt%, from 3 to 10 wt%, from 4 to 30 wt%, from 4 to 25 wt%, from 4 to 20 wt%, from 4 to 15 wt%, from 4 to 10 wt%, from 5 to 30 wt%, from 5 to 25 wt%, from 5 to 20 wt%, from 5 to 15 wt%, from 5 to 10 wt%, from 6 to 30 wt%, from 6 to 25 wt%, from 6 to 20 wt%, from 6 to 15 wt%, from 6 to 10 wt%, from 7 to 30 wt%, from 7 to 25 wt%, from 7 to 20 wt%, from 7 to 15 wt% or from 7 to 10 wt%, based on the total weight of the composition.
Aspect 21: The method of any one of Aspects 1-14, wherein the curable composition comprises a HALS that is capable of forming covalent bonds within the cured composition and the total amount of HALS in the curable composition is from 10 to 30 wt%, in particular from 12.5 to 30 wt%, from 15 to 30 wt%, or from 20 to 30 wt%, based on the total weight of the curable composition.
Aspect 22: The method of any one of Aspects 1-14, wherein the curable composition comprises a HALS that is not capable of forming covalent bonds within the cured composition and the total amount of HALS in the curable composition is from 3 to 15 wt%, in particular from 3 to 12 wt%, from 3 to 10 wt%, or from 4 to 10 wt%, based on the total weight of the curable composition.
Aspect 23: The method of any one of Aspects 1-22, wherein the curable composition comprises a (meth)acrylate-functionalized monomer.
Aspect 24: The method of Aspect 23, wherein the (meth)acrylate-functionalized monomer has 1 to 6 (meth)acrylate groups, in particular 1 to 3 (meth)acrylate groups.
Aspect 25: The method of any one of Aspects 1-24, wherein the curable composition comprises a mono(meth)acrylate-functionalized monomer.
Aspect 26: The method of any one of Aspects 1-25, wherein the curable composition comprises a (meth)acrylate-functionalized monomer containing two or more (meth)acrylate functional groups per molecule.
Aspect 27: The method of any one of Aspects 1-26, wherein the curable composition comprises a (meth)acrylate-functionalized oligomer.
Aspect 28: The method of Aspect 27, wherein the (meth)acrylate functionalized oligomer has 1 to 18 (meth)acrylate groups, in particular 2 to 6 (meth)acrylate groups,
Aspect 29: The method of any one of Aspects 1-28, wherein the curable composition comprises a (meth)acrylate-functionalized oligomer selected from the group consisting of (meth)acrylate-functionalized urethane oligomers, (meth)acrylate-functionalized epoxy oligomers, (meth)acrylate-functionalized polyether oligomers, (meth)acrylate-functionalized polydiene oligomers, (meth)acrylate-functionalized polycarbonate oligomers, (meth)acrylate-functionalized polyester oligomers, (meth)acrylate-functionalized (meth)acrylic oligomers, and mixtures thereof.
Aspect 30: The method of any of Aspects 1-29, wherein the (meth)acrylate-functionalized compound of the curable composition comprises one or more (meth)acrylate-functionalized monomers having from 1 to 6 (meth)acrylate groups per molecule, optionally in combination with one or more (meth)acrylate-functionalized oligomers containing two or more (meth)acrylate groups per molecule selected from the group consisting of (meth)acrylate-functionalized urethane oligomers, (meth)acrylate-functionalized epoxy oligomers, (meth)acrylate-functionalized polyether oligomers, (meth)acrylate-functionalized polyester oligomers, and mixtures thereof.
Aspect 31: The method of any of Aspects 1-30, wherein the total amount of (meth)acrylate-functionalized compound in the curable composition is from 0.1 to 97 wt%, in particular from 1 to 95 wt%, from 5 to 93 wt%, from 10 to 90 wt%, from 15 to 85 wt%, from 20 to 80 wt%, from 25 to 75 wt%, based on the weight of the curable composition.
Aspect 32: The method of any of Aspects 1-31, wherein the curable composition further comprises one or more of additives that include, but are not limited to, photoinitiators, antioxidants, ultraviolet absorbers, photostabilizers, foam inhibitors, solvents, flow or leveling agents, colorants, pigments, dispersants (wetting agents), slip additives, fillers, thixotropic agents, matting agents, thermoplastics such as acrylic resins that do not contain any free radical-polymerizable functional groups, waxes or other various additives, including any of the additives conventionally utilized in the coating, sealant, adhesive, molding or ink arts.
Aspect 33: The method of any of Aspects 1-32, wherein the substrate on which the curable composition is applied comprises one or more of metal, paper, paperboard, cardboard, glass, plastics (e.g., thermoplastics such as polyolefins, polycarbonate, acrylonitrile butadiene styrene (ABS), and blends thereof), composites, wood, leather, carbon fiberglass, nonwovens, ceramics (e.g., granite, marble), pigmented coatings, concrete, and combinations thereof.
Aspect 34: The method of any of Aspects 1-33, wherein the substrate surface is periodically treated with a halogenating agent to restore and/or enhance the antimicrobial resistance of the surface on which the cured composition is present.
Aspect 35: The method of any of Aspects 1-34, wherein the coating, curing and treating steps are repeated so that the substrate contains two or more layers of the cured composition.
Aspect 36: The method of any of Aspects 1-35, wherein the surface of the substrate containing the cured composition exhibits substantially improved antimicrobial properties compared to a cured composition not containing HALS.
Aspect 37: The method of any of Aspects 1-36, wherein the surface of the substrate retains over 50% of its antimicrobial properties (based on the concentration of halogen remaining in the coating present as halogenated HALS) for up to 3 weeks or up to 4 weeks or up to 5 weeks or up to 6 weeks after the step of treating the cured composition with a chlorinating agent.
Aspect 38: The method of any of Aspects 1-37, wherein the antimicrobial properties of the surface of the substrate are reactivated or enhanced by periodically contacting the surface with a halogenating agent, such as sodium hypochlorite or povidone-iodine.
Aspect 39: A method of treating a cured composition with a halogenating agent to halogenate a HALS present in the cured composition wherein the cured composition comprises a cured product of a curable composition comprising a HALS and a (meth)acrylate-functionalized compound.
Aspect 40: The method of Aspect 39, wherein the halogenating agent is sodium hypochlorite or Betadine^{®} (povidone-iodine).
Aspect 41: A curable composition comprising a (meth)acrylate-functionalized compound and HALS, wherein the total amount of HALS in the composition is at least 3% by weight based on the weight of the composition.
Aspect 42: The curable composition of Aspect 41, wherein the curable composition comprises a HALS that is capable of being crosslinked into the cured composition.
Aspect 43: The curable composition of Aspect 41, wherein the curable composition comprises a HALS that is capable of forming covalent bonds within the cured composition, preferably without being crosslinked into the cured composition.
Aspect 44: The curable composition of Aspect 42, wherein the HALS is an ethylenically unsaturated HALS, in particular 2,2,6,6-tetramethyl-4-piperidyl (meth)acrylate.
Aspect 45: The curable composition of Aspect 41, wherein the curable composition comprises a HALS that is not capable of forming covalent bonds within the cured composition.
Aspect 47: The curable composition of Aspect 45, wherein the HALS is a non-ethylenically unsaturated HALS, in particular bis(2,2,6,6-tetramethyl-4-piperidinyl) sebacate.
Aspect 48: The curable composition of any one of Aspects 41-47, wherein the total amount of HALS in the curable composition is at least 3 wt% relative to the total weight of the composition, in particular from 3 to 30 wt%, from 3 to 25 wt%, from 3 to 20 wt%, from 3 to 15 wt%, from 3 to 10 wt%, from 4 to 30 wt%, from 4 to 25 wt%, from 4 to 20 wt%, from 4 to 15 wt%, from 4 to 10 wt%, from 5 to 30 wt%, from 5 to 25 wt%, from 5 to 20 wt%, from 5 to 15 wt%, from 5 to 10 wt%, from 6 to 30 wt%, from 6 to 25 wt%, from 6 to 20 wt%, from 6 to 15 wt%, from 6 to 10 wt%, from 7 to 30 wt%, from 7 to 25 wt%, from 7 to 20 wt%, from 7 to 15 wt% or from 7 to 10 wt%, based on the total weight of the composition.
Aspect 49: The curable composition of Aspects 41, wherein the curable composition comprises a HALS that is capable of forming covalent bonds within the cured composition and the total amount of HALS in the curable composition is from 10 to 30 wt%, in particular from 12.5 to 30 wt%, from 15 to 30 wt%, or from 20 to 30 wt%, based on the total weight of the curable composition.
Aspect 50: The curable composition of Aspects 41, wherein the curable composition comprises a HALS that is not capable of forming covalent bonds within the cured composition and the total amount of HALS in the curable composition is from 3 to 15 wt%, in particular from 3 to 12 wt%, from 3 to 10 wt%, or from 4 to 10 wt%, based on the total weight of the curable composition.
Aspect 51: The curable composition of any one of Aspects 41-50, wherein the curable composition comprises a (meth)acrylate-functionalized monomer.
Aspect 52: The curable composition of any one of Aspects 41-51, wherein the (meth)acrylate-functionalized monomer has 1 to 6 (meth)acrylate groups, in particular 1 to 3 (meth)acrylate groups.
Aspect 53: The curable composition of any one of Aspects 41-52, wherein the curable composition comprises a mono(meth)acrylate-functionalized monomer.
Aspect 54: The curable composition of any one of Aspects 41-53, wherein the curable composition comprises a (meth)acrylate-functionalized monomer containing two or more (meth)acrylate functional groups per molecule.
Aspect 55: The curable composition of any one of Aspects 41-54, wherein the curable composition comprises a (meth)acrylate-functionalized oligomer.
Aspect 56: The curable composition of Aspect 55, wherein the (meth)acrylate functionalized oligomer has 1 to 18 (meth)acrylate groups, in particular 2 to 6 (meth)acrylate groups,
Aspect 57: The curable composition of any one of Aspects 41-56, wherein the curable composition comprises a (meth)acrylate-functionalized oligomer selected from the group consisting of (meth)acrylate-functionalized urethane oligomers, (meth)acrylate-functionalized epoxy oligomers, (meth)acrylate-functionalized polyether oligomers, (meth)acrylate-functionalized polydiene oligomers, (meth)acrylate-functionalized polycarbonate oligomers, (meth)acrylate-functionalized polyester oligomers, (meth)acrylate-functionalized (meth)acrylic oligomers, and mixtures thereof.
Aspect 58: The curable composition of any one of Aspects 41-57, wherein the (meth)acrylate-functionalized compound of the curable composition comprises one or more (meth)acrylate-functionalized monomers having from 1 to 6 (meth)acrylate groups per molecule, optionally in combination with one or more (meth)acrylate-functionalized oligomers containing two or more (meth)acrylate groups per molecule selected from the group consisting of (meth)acrylate-functionalized urethane oligomers, (meth)acrylate-functionalized epoxy oligomers, (meth)acrylate-functionalized polyether oligomers, (meth)acrylate-functionalized polyester oligomers, and mixtures thereof.
Aspect 59: The curable composition of any one of Aspects 41-58, wherein the total amount of (meth)acrylate-functionalized compound in the curable composition is from 0.1 to 97 wt%, in particular from 1 to 95 wt%, from 5 to 93 wt%, from 10 to 90 wt%, from 15 to 85 wt%, from 20 to 80 wt%, from 25 to 75 wt%, based on the weight of the curable composition.
Aspect 60: The curable composition of any one of Aspects 41-59, wherein the curable composition further comprises one or more of additives that include, but are not limited to, photoinitiators, antioxidants, ultraviolet absorbers, photostabilizers, foam inhibitors, solvents, flow or leveling agents, colorants, pigments, dispersants (wetting agents), slip additives, fillers, thixotropic agents, matting agents, thermoplastics such as acrylic resins that do not contain any free radical-polymerizable functional groups, waxes or other various additives, including any of the additives conventionally utilized in the coating, sealant, adhesive, molding or ink arts.
Aspect 61: A cured composition comprising a N-halo-hindered amine, wherein the cured composition is obtained by (a) curing a curable composition according to any one of Aspects 41-60; and (b) then converting the HALS to a N-halo-hindered amine by treating the cured composition with a halogenating agent.
Aspect 62: The cured composition of Aspect 61, wherein the halogenating agent is a chlorinating agent, in particular sodium hypochlorite.
Aspect 63: The cured composition of Aspect 53 or 54, wherein the curing comprises one of (1) exposing the curable composition to UV energy and/or visible light; (2) exposing the curable composition to an electron beam, (3) initiating polymerization through the use of a redox-generated radical; or (4) initiating polymerization through the use of a thermally-generated radical.
Aspect 64: A use of at least one HALS, at least one (meth)acrylate-functionalized compound and at least one halogenating agent to obtain an antimicrobial coating on a surface of a substrate.

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

In some embodiments, the invention herein can be construed as excluding any element or process step that does not materially affect the basic and novel characteristics of the compositions and methods described herein. Additionally, in some embodiments, the invention can be construed as excluding any element or process step not specified herein.

Although the invention is illustrated and described herein with reference to specific embodiments, the invention is not intended to be limited to the details shown. Rather, various modifications may be made in the details within the scope and range of equivalents of the claims and without departing from the invention.

### EXAMPLES

### Preparation of a Cured Acrylate Composition

The curable composition was applied to aluminum test panels @ 1 mil thickness and cured with a medium pressure mercury arc lamp with 500 mJ/cm² of UVA energy. The cured samples were then conditioned for 24hrs @ 72°F/50%RH.

### Chlorination step

Test panels coated with the cured acrylate resin were immersed in a 50/50 bleach/DI water solution for 1.5 min. The panels were then rinsed with DI water for 1.5 min (twice) to remove residual bleach and allowed to dry for 24 hrs. The presence of halamine was confirmed by using a Znl/starch solution (Sigma-Aldrich) as an indicator of an "active" surface. A cotton swab was saturated with said solution and rubbed across the treated surface multiple times. A color change of the saturated cotton swab from clear to purple is indicative of the presence of halamine.

### Testing of the Cured Resin Coating for Antimicrobial Activity

**Example 1.** Seven coated samples (1A-1H) identified in the table below were tested using the method described in JIS Z 2801:2010 (or ISO 22196:2011). The coating formulation contained PRO14589, which is a blend of multifunctional urethane acrylate oligomers with acrylate monomers having a range of functionality which offers a good balance of flexibility and hardness. The indicated % of HALS is based on the weight of the HALS compared to the total weight of the uncured formulation.

| **Sample** | **Coating formulation (cured)** | **Chlorinated?** |
|---|---|---|
| | uncoated substrate | |
| 1A | PRO14589 | No |
| 1B | PRO14589 | Yes |
| 1C | PRO14589 + 2% HALS (Tinuvin 770) | Yes |
| 1D | PRO14589 + 5% HALS (Tinuvin 770) | Yes |
| 1E | PRO14589 + 7.5% HALS (Tinuvin 770) | Yes |
| 1F | PRO14589 + 10% HALS (Tinuvin 770) | Yes |
| 1G | PRO14589 + 7.5% HALS (TEMPO methacrylate) | Yes |

The samples were tested against Staphylococcus aureus and E. coli where the contact time was 24 hrs. The table below shows the results of the testing.

| | **Staphylococcus aureus** | | **E. coli** | |
|---|---|---|---|---|
| **Sample** | **Percent Reduction** | **Log₁₀ Reduction** | **Percent Reduction** | **Log₁₀ Reduction** |
| **uncoated substrate** | N/A | N/A | N/A | N/A |
| **1A** | No Reduction | No Reduction | No Reduction | No Reduction |
| **1B** | No Reduction | No Reduction | No Reduction | No Reduction |
| **1C** | 72.61% | 0.56 | 94.6010% | 1.27 |
| **1D** | >99.99% | >4.04 | 98.5721% | 1.85 |
| **1E** | >99.98% | >3.66 | 99.9997% | 5.6 |
| **1F** | >99.98% | >3.66 | >99.99997% | >6.55 |
| **1G** | 98.72% | 1.89 | 75.10% | 0.6 |

It was observed that when no HALS was present in a sample regardless of whether the sample was chlorinated (Samples 1A and 1B), no reduction in the levels of *Staphylococcus aureus* or E. *coli was* detected. In contrast, Sample 1C containing 2% TINUVIN ^{®} 770 as HALS showed significant reduction in the levels of these two microorganisms while Samples 1D, 1E and 1F containing 5%, 7.5% and 10% TINUVIN^{®} 770 as HALS, respectively, showed almost complete reduction. By comparison, Sample G containing 7.5% TEMPO methacrylate as HALS showed a slightly lower reduction of Staphylococcus aureus (compared to Sample 1E) and a significantly lower reduction of E. coli (compared to Sample 1E).

## Claims

1. A method for protecting a surface of a substrate, the method comprising:
- applying a curable composition comprising a (meth)acrylate-functionalized compound and a hindered amine light stabilizer (HALS) on a surface of a substrate ;
- curing the curable composition to provide a cured composition;
- treating the cured composition with a halogenating agent to halogenate the HALS present in the cured composition; and
- optionally removing any residual halogenating agent.

2. The method according to claim 1, wherein the curing comprises one of: (1) exposing the curable composition to UV energy and/or visible light; (2) exposing the curable composition to an electron beam, (3) initiating polymerization through the use of a redox-generated radical; or (4) initiating polymerization through the use of a thermally-generated radical.

3. The method according to claim 1 or 2, wherein the halogenating agent is a chlorinating agent, in particular sodium hypochlorite, more particularly a sodium hypochlorite solution.

4. The method according to any one of claims 1 to 3, wherein the HALS is capable of forming covalent bonds within the cured composition, preferably without being crosslinked into the cured composition.

5. The method according to claim 4, wherein the HALS is 2,2,6,6-tetramethyl-4-piperidyl (meth)acrylate.

6. The method according to any one of claims 1 to 3, wherein the HALS is not capable of forming covalent bonds within the cured composition.

7. The method according to claim 6, wherein the HALS is bis(2,2,6,6-tetramethyl-4-piperidyl) sebacate.

8. The method according to any one of claims 1 to 7, where the total amount of HALS in the curable composition is at least 3 wt% based on the total weight of the composition, in particular from 3 to 30 wt%, from 3 to 25 wt%, from 3 to 20 wt%, from 3 to 15 wt%, from 3 to 10 wt%, from 4 to 30 wt%, from 4 to 25 wt%, from 4 to 20 wt%, from 4 to 15 wt%, from 4 to 10 wt%, from 5 to 30 wt%, from 5 to 25 wt%, from 5 to 20 wt%, from 5 to 15 wt%, from 5 to 10 wt%, from 6 to 30 wt%, from 6 to 25 wt%, from 6 to 20 wt%, from 6 to 15 wt%, from 6 to 10 wt%, from 7 to 30 wt%, from 7 to 25 wt%, from 7 to 20 wt%, from 7 to 15 wt% or from 7 to 10 wt%, based on the total weight of the composition.

9. The method according to any one of claims 1 to 8, wherein the (meth)acrylate-functionalized compound of the curable composition comprises one or more (meth)acrylate-functionalized monomers having from 1 to 6 (meth)acrylate groups per molecule, optionally in combination with one or more (meth)acrylate-functionalized oligomers containing two or more (meth)acrylate groups per molecule selected from the group consisting of (meth)acrylate-functionalized urethane oligomers, (meth)acrylate-functionalized epoxy oligomers, (meth)acrylate-functionalized polyether oligomers, (meth)acrylate-functionalized polyester oligomers, and mixtures thereof.

10. The method according to any one of claims 1 to 9, wherein the total amount of (meth)acrylate-functionalized compound in the curable composition is from 0.1 to 97 wt%, in particular from 1 to 95 wt%, from 5 to 93 wt%, from 10 to 90 wt%, from 15 to 85 wt%, from 20 to 80 wt% or from 25 to 75 wt%, based on the weight of the curable composition.

11. The method according to any one of claims 1 to 10, wherein the substrate comprises one or more of metal, paper, paperboard, cardboard, glass, plastics, composites, wood, leather, carbon fiberglass, nonwovens, ceramics (e.g., granite, marble), pigmented coatings, concrete, and combinations thereof.

12. A method of treating a cured composition with a halogenating agent to halogenate a HALS present in the cured composition wherein the cured composition comprises a cured product of a curable composition comprising a HALS and a (meth)acrylate-functionalized compound.

13. A curable composition comprising a (meth)acrylate-functionalized compound and HALS, wherein the total amount of HALS in the composition is at least 3% by weight based on the weight of the composition.

14. A cured composition comprising a N-halo-hindered amine, wherein the cured composition is obtained by (a) curing a curable composition as defined in claim 13; and (b) then converting the HALS to a N-halo-hindered amine by treating the HALS with a halogenating agent.

15. A use of at least one HALS, at least one (meth)acrylate-functionalized compound and at least one halogenating agent to obtain an antimicrobial coating on a surface of a substrate.
